# EUROPEAN PATENT SPECIFICATION

(11) **EP 4 059 670 B1**
(45) Date of publication and mention of the grant of the patent: **03.09.2025**
(21) Application number: 22161437.3
(22) Date of filing: 10.03.2022
(51) Int. Cl.: B25J 9/00, B65B 59/00, B65G 47/90, B65B 59/02, B65B 35/54, B65B 35/38, B65B 35/30, B25J 11/00, B65B 5/10, B65B 65/00

(54) **A GRIPPING DEVICE FOR AT LEAST ONE PRODUCT, PREFERABLY A PACKET OF PASTA, AN APPARATUS FOR DISTRIBUTING AT LEAST ONE PRODUCT, IN PARTICULAR A PACKET OF PASTA, AND A METHOD OF DISTRIBUTING A NUMBER OF PRODUCTS, PREFERABLY A PACKET OF PASTA**
EINE GREIFVORRICHTUNG FÜR MINDESTENS EIN PRODUKT, VORZUGSWEISE EIN NUDELPAKET, EINE VORRICHTUNG ZUM VERTEILEN MINDESTENS EINES PRODUKTS, INSBESONDERE EINES NUDELPAKETS, UND EIN VERFAHREN ZUM VERTEILEN EINER ANZAHL VON PRODUKTEN, VORZUGSWEISE EINES NUDELPAKETS
UN DISPOSITIF DE PRÉHENSION D'AU MOINS UN PRODUIT, DE PRÉFÉRENCE UN PAQUET DE PÂTES, UN APPAREIL POUR DISTRIBUER AU MOINS UN PRODUIT, EN PARTICULIER UN PAQUET DE PÂTES, ET UN PROCÉDÉ DE DISTRIBUTION D'UN CERTAIN NOMBRE DE PRODUITS, DE PRÉFÉRENCE UN PAQUET DE PÂTES

(30) Priority: 17.03.2021 IT 202100006326
(43) Date of publication of application: 21.09.2022
(73) Proprietor: Pastificio Donato Campioni di Adriano Campioni E C. S.N.C., 20062 Cassano d'Adda Milano (IT)
(72) Inventor: GIOVANARDI, Giovanni, 20062 Cassano d'Adda (IT); CAMPIONI, Alberto, 20062 Cassano d'Adda (IT)
(74) Representative: Lissandrini, Marco

(56) References cited:
- EP-A1- 3 597 377
- WO-A1-2015/121668
- CA-A1- 2 426 057
- DE-A1- 102016 218 126
- US-A- 4 199 050
- US-A- 4 800 703
- US-A- 4 832 180
- US-A- 5 251 422
- US-A1- 2008 010 954
- US-A1- 2009 320 417
- US-A1- 2011 173 930
- US-A1- 2019 071 196

## Description

The present invention relates to a gripping device for at least one product, preferably a packet of pasta, an apparatus for distributing at least one product, preferably a packet of pasta, and a method for distributing at least one product, preferably a packet of pasta.

In other words, the present invention relates to the technical field of the sorting systems of the product flows generated within a production line and, in particular, of the sorting of such products to operating stations from upstream to downstream the production line.

By way of non-limiting example, the present invention finds wide application within the production lines belonging to the pasta sector.

In particular, the present invention can be efficiently used in the downstream portion of the production line of a packaging machine.

For example, the present invention can be applied in the portion of a production line of a pasta factory interposed between a packaging machine and a cartoning machine so as to adjust the supply of the packets of pasta, previously packaged by the packaging machine, to the cartoning machine to make the secondary packaging of the product.

As can be seen in US2011/173930A1, US2008/010954A1, US4832180A, US4199050A, US2009/320417A1, US2019/071196A1, US5251422A and US4800703A, sorting devices are present on the market today, for example summing systems, which allow to sort a plurality of product flows coming from respective packaging machines in a reduced number of product flows each of which directed to a specific cartoning machine.

The most efficient devices allow to sort three product flows from the packaging machines into two product flows directed to the filling machines of the cartoning machine.

In other words, such apparatuses divide the third flow over the two remaining flows.

Disadvantageously, an increase in the number of flows from the packaging machines is incompatible with the mechanical capacities of sorting the products of the apparatus (for a long pasta packaging line such a limit is about 120 packets per minute per single flow), reducing the production efficiency.

The two outgoing flows from the summing system arrive by means of respective conveyors to a respective filling machine

In particular, the filling machines receive the secondary packaging from the same forming machine.

Disadvantageously, the operating costs (also caused by the increase in the complexity of the system which can be reflected in an increase in machine downtime and maintenance times) and the increase in overall dimensions result in the need to use a single forming machine to provide secondary packaging to the two filling machines.

Disadvantageously, moreover, the possible blocking of one of the two filling machines, and therefore of one of the two cartoning lines, results in the need to recover all the products arranged on the conveyor which leads from the summing apparatus to the same blocked filling machine, causing an increase in the costs of the production process caused by the need for trained labour and the inevitable machine shutdown.

Furthermore, blocking such a line not only implies the need to stop the product flow from one of the packaging machines, but also the need to stop a second flow of the three as the sorting apparatus and the filling machine itself are not able to take charge of the entire flow of products generated by the sum of the two remaining flows.

**In** other words, due to the impossibility of an instantaneous regulation of the flow of products upstream of the sorting apparatus, the production volume can undergo a reduction of up to one third with respect to the normal production cycle.

Such apparatuses can comprise pusher filling systems configured to simultaneously move a plurality of products, for example a plurality of layers of pasta packets overlapped to form the so-called "bundle", from an accumulation station to the containment volume defined by the secondary packaging.

Disadvantageously, the pusher systems exhibit strong functional limits during the movement of packs, for example small packets of long pasta (e.g., packets of less than 300 grams of long pasta), provided with reduced dimensions transverse to the thrust application direction, causing the crushing of the packets resulting in deterioration of the product and/or a deterioration of the same packet, for example by tearing or damage to the prints.

Alternatively, some apparatuses comprise a plurality of manipulators each of which is configured to individually pick up the products arranged on a conveyor coming from a respective packaging machine and arrange them, at a respective cartoning station, inside the secondary packaging.

In particular, such manipulators generally comprise suction-cup gripping means adapted to constrain the product to the manipulator.

Disadvantageously, due to the inevitable tolerances between the theoretical gripping point and the actual gripping point, the grip of the product is often inaccurate and is reflected in a subsequent inaccurate positioning inside the secondary packaging.

In fact, the relative sliding between the suction cup and the packet generates uncertainty regarding the actual gripping point on the packet.

Furthermore, the need to move the products individually results in high movement rhythms of the manipulators with a consequent increase in operating costs and a reduction in the average operating life of the single manipulator.

Disadvantageously, moreover, the need for a manipulator for each individual conveyor causes the occurrence of high dimensions with a consequent increase in the fixed costs of the production plant and problems related to the movement volumes of the manipulators themselves.

In this context, the technical task underlying the present invention is to propose a gripping device for at least one product, preferably a packet of pasta, an apparatus for distributing at least one product, preferably a packet of pasta, and a method for distributing at least one product, preferably a packet of pasta which overcome the aforementioned drawbacks of the prior art.

In particular, it is an object of the present invention to provide a gripping device for at least one product, preferably a packet of pasta, an apparatus for distributing at least one product, preferably a packet of pasta, and a method for distributing at least one product, preferably a packet of pasta which allow to simplify the distribution and sorting operations of the products within a production line.

A further object of the present invention is to provide a gripping device for at least one product, preferably a packet of pasta, an apparatus for distributing at least one product, preferably a packet of pasta, and a method for distributing at least one product, preferably a packet of pasta, having an increased operational flexibility with respect to the devices of the prior art.

Furthermore, it is a further object of the present invention to provide a gripping device for at least one product, preferably a packet of pasta, an apparatus for distributing at least one product, preferably a packet of pasta, and a method for distributing at least one product, preferably a packet of pasta, capable of increasing the operational efficiency of the packaging process.

A further object of the present invention is to provide a gripping device for at least one product, preferably a packet of pasta, an apparatus for distributing at least one product, preferably a packet of pasta, and a method for distributing at least one product, preferably a packet of pasta, capable of reducing the operating costs related to the packaging process. A further object of the present invention is to provide a gripping device for at least one product, preferably a packet of pasta, an apparatus for distributing at least one product, preferably a packet of pasta, and a method for distributing at least one product, preferably a packet of pasta, capable of simplifying the secondary packaging process within a production line, for example during the steps of packaging packets of pasta.

The specified technical task and the specified objects are substantially achieved by a gripping device for at least one product, preferably a packet of pasta, an apparatus for distributing at least one product, preferably a packet of pasta, and a method for distributing at least one product, preferably a packet of pasta, comprising the technical features set out in one or more of the appended claims.

The dependent claims correspond to different possible embodiments of the invention.

Further features and advantages of the present invention will become more apparent from the following indicative and therefore non-limiting description
of a preferred but not exclusive embodiment of a gripping device for at least one product, preferably a packet of pasta, an apparatus for distributing at least one product, preferably a packet of pasta, and a method for distributing at least one product, preferably a packet of pasta, as illustrated in the accompanying drawings in which:
- figures 1A-1C are perspective views in respective operating configurations of a gripping device for at least one packet of long dried pasta according to a possible embodiment of the present invention;
- figures 1D-1E are side views in respective operating configurations of a gripping device for at least one packet of long dried pasta according to a possible embodiment of the present invention;
- figure 2 is a perspective view of an apparatus for distributing at least one product, preferably a packet of pasta, in accordance with a possible embodiment of a further aspect of the present invention;
- figure 3 is a top view of the apparatus for distributing at least one product, preferably a packet of pasta of figure 2;

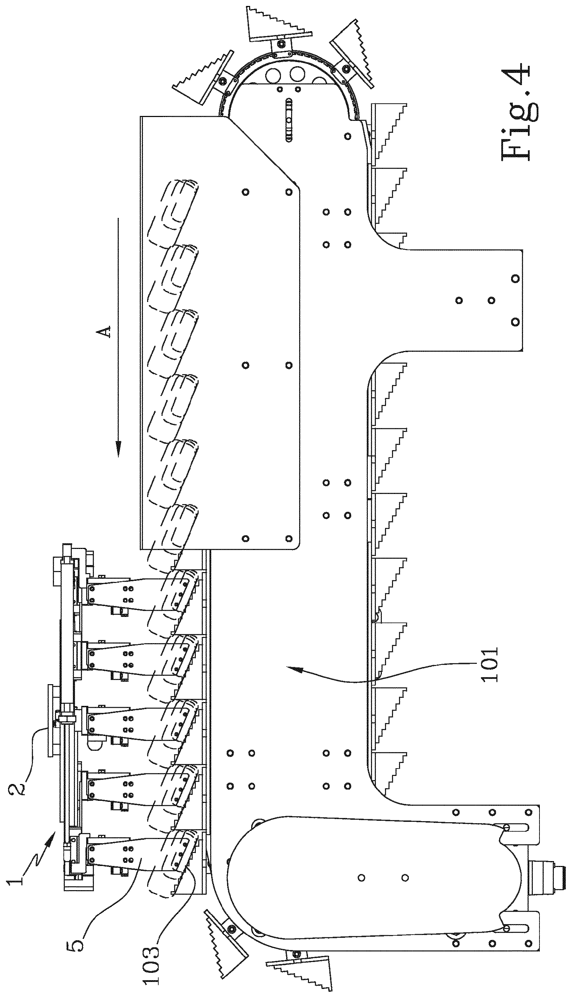

- figure 4 is a side view of a portion of the apparatus for distributing at least one product, preferably a packet of pasta of figure 2.

With reference to the accompanying drawings, the reference number 1 has been used to generally designate a gripping device for at least one packet of long dried pasta, which will be referred to herein as gripping device 1.

In the present discussion, the term "dried pasta" refers to a type of pasta, generally produced industrially, which undergoes a drying process during the production process.

Furthermore, the term "long pasta" refers to a type (or shape) of pasta which extends mainly along a main extension direction.

Preferably, the term "packet of long dried pasta" indicates, in the present discussion, a food product comprising a plurality of individual elements of long dried pasta and an envelope adapted to contain the plurality of elements of long dried pasta arranged so that the respective main extension directions are substantially parallel to each other.

In other words, the packet of pasta preferably extends along a main extension axis substantially parallel to the aforementioned main extension directions of the long dried pasta elements.

Preferably, the envelope is made of a loose material, for example a polymer film, adapted to conform to the dimensions defined by the plurality of pasta elements contained therein.

In other words, the envelope constitutes the so-called primary packaging for long dried pasta.

In particular, the packet of pasta can define two opposite end portions, or head portions, at the ends of the pasta elements and a central portion interposed at the end portions.

Advantageously, the gripping device 1 is configured to constrain at least one packet "P" of pasta to movement means so as to allow a movement thereof between a plurality of operating positions.

In particular, the gripping device 1 comprises a support portion 2 adapted to connect the gripping device 1 to the aforementioned movement means. By way of non-limiting illustration, the movement means can comprise manipulator devices, for example delta robots, Cartesian manipulators, pickers, anthropomorphic robotic arms, scara robots and/or the like.

In other words, the gripping device 1 can be connected to one of the aforementioned manipulators to allow a movement of the packet between the aforementioned plurality of operating positions.

The gripping device 1 further comprises at least a first blocking portion 3 and at least a second blocking portion 4.

Preferably, the first blocking portion 3 and the second blocking portion 4 are connected to the support portion 2 and opposite each other.

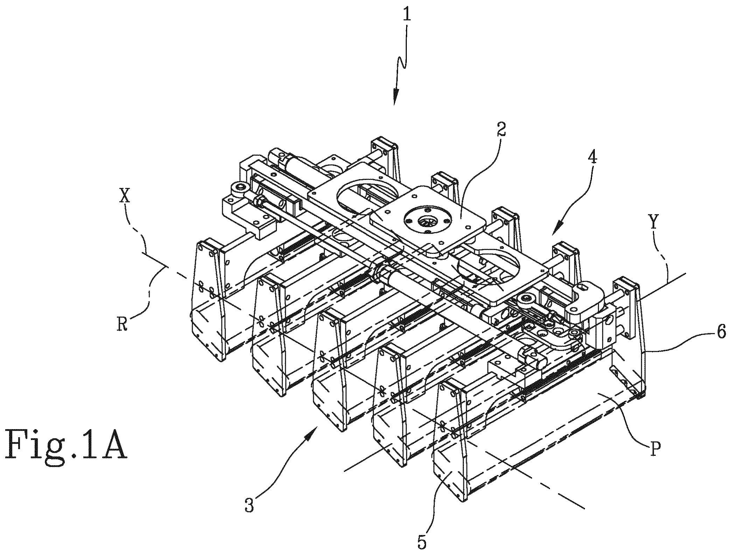

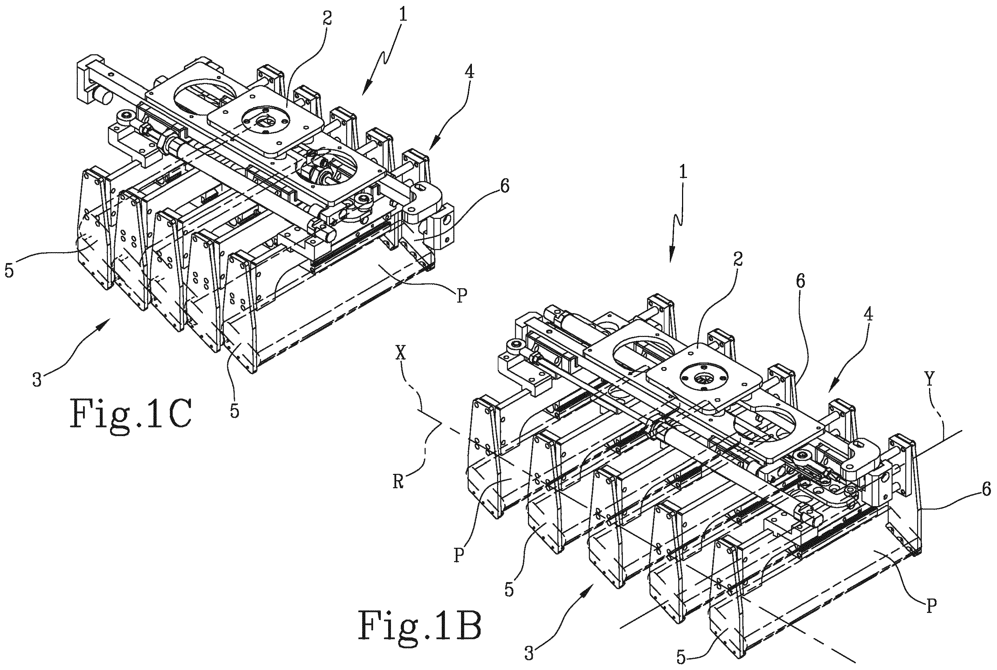

The first blocking portion 3 and the second blocking portion 4 are reversibly movable closer and farther away along a movement direction "Y" between a gripping position (figure 1A), in which the first blocking portion 3 and the second blocking portion 4 are arranged at a first distance so that they abut against the respective opposite head portions of the packet to constrain the packet to the gripping device 1, and a release position (figure 1B), in which the first blocking portion 3 and the second blocking portion 4 are arranged at a second distance greater than the first distance.

In other words, during the passage from the gripping position (figure 1A) to the release position (figure 1B), the first blocking portion 3 and/or the second blocking portion 4 are distanced from each other so that the first blocking portion 3 and/or the second blocking portion 4 are not arranged abutted against the head portions of the packet "P" of pasta, allowing a release of the packet "P" of pasta.

Preferably, the first blocking portion 3 and/or the second blocking portion 4 are mutually translatable and/or rotatable with respect to the support portion 2.

In accordance with a possible, purely illustrative and non-limiting embodiment of the present invention, the first blocking portion 3 and the second blocking portion 4 are connected to the support portion 2 so as to be arranged facing and opposite each other with respect to the support portion 2 itself. Furthermore, the first blocking portion 3 and the second blocking portion 4 can be rotatable with respect to the support portion 2 to at least partially carry out a preferably reversible movement between the gripping position (figure 1A) and the release position (figure 1B). In particular, the first blocking portion 3 and the second blocking portion 4 can be rotatable with respect to a rotation axis "R" which is transverse, preferably perpendicular, to the movement direction "Y".

Advantageously, the first blocking portion 3 and the second blocking portion 4 can be movable symmetrically and/or simultaneously to release the head portions of the packet of pasta at the same time, limiting, preferably preventing, the occurrence of moments due to the friction forces which can determine an accidental movement of the packet of pasta after the release.

Thereby, the gripping device 1 ensures a high positioning accuracy of the product with respect to the movement means, overcoming the inaccuracies due to the inevitable dimensional tolerances which must be considered using suction-cup gripping devices.

Preferably, the movement direction "Y" is parallel to the main extension axis of the packet "P" of pasta at least in the gripping position of the first blocking portion 3 and the second blocking portion 4.

In accordance with a possible embodiment and as illustrated in the accompanying drawings, the first blocking portion 3 and the second blocking portion 4 can be respectively defined by a plurality of first blocking elements 5 and second blocking elements 6.

Preferably, each of the first blocking elements 5 is arranged opposite a respective second blocking element 6 with respect to the movement direction.

In particular, each of the first blocking elements 5 is operatively connected to a respective second blocking element 6 to pick up and release at least one packet "P" of pasta, preferably a respective packet "P" of pasta.

Thereby, the first blocking portion 3 and the second blocking portion 4 allow to simultaneously constrain to the gripping device 1 a plurality of packets "P" of pasta, increasing the operational flexibility of the gripping device 1 and allowing a reduction, with respect to the systems of the prior art, of the movements which the movement means must perform to move a given quantity of packets "P" of pasta.

In other words, at least a first blocking element 5 and at least a second blocking element 6 are reversibly movable closer and farther away along a respective movement direction, preferably parallel and/or coinciding with the movement direction "Y", between a gripping position, in which the first blocking element 5 and the second blocking element 6 are arranged at a first distance so that they abut against respective opposite head portions of the packet to constrain the packet to the gripping device 1, and a release position (figure 1B), in which the first blocking element 5 and the second blocking element 6 are arranged at a second distance greater than the first distance.

Preferably, each of the first blocking elements 5 and each of the second blocking elements 6 are reversibly movable closer and farther away along the respective movement directions between respective gripping positions (figure 1A) and respective release positions (figure 1B).

In accordance with a possible embodiment of the present invention purely by way of non-limiting example, each of the first blocking elements 5 and/or each of the second blocking elements 6 is reversibly movable along a respective movement direction "Y" autonomously and/or independently from the movement of the remaining first blocking elements 5 and/or second blocking elements 6.

In other words, the first blocking elements 5 and/or the second blocking elements 6 can be reversibly movable along a respective movement direction "Y" in a mutually independent and selective manner.

According to further possible embodiments of the present invention, the first blocking elements 5 and/or the second blocking elements 6 can be moved in a manner at least partially dependent on each other in order to optimise the use of the actuating means used to carry out the movement thereof.

Furthermore, the first blocking elements 5 and/or the second blocking elements 6 can be reversibly rotatable with respect to the support portion 2 with respect to a respective rotation axis "R" which is transverse, preferably perpendicular, to the movement direction "Y" to at least partially perform a reversible movement between the respective gripping positions (figure 1A) and the respective release positions (figure 1B).

In particular, the respective movement directions of the first blocking elements 5 and of the second blocking elements 6 can be parallel to the main extension axis of the packet "P" of pasta at least during a gripping position.

According to a possible embodiment of the present invention, each of the first blocking elements 5 and/or each of the second blocking elements 6 is reversibly rotatable with respect to the support portion 2 with respect to a respective rotation axis "R" which is transverse, preferably perpendicular, to the movement direction "Y" autonomously and/or independently of the movement of the remaining first blocking elements 5 and/or second blocking elements 6.

In other words, each of the first blocking elements 5 and/or each of the second blocking elements 6 can be selectively rotatable with respect to a respective rotation axis "R" in a reversible manner.

According to further possible embodiments of the present invention, the first blocking elements 5 and/or the second blocking elements 6 are rotatable in a manner at least partially dependent on each other in order to optimise the use of the actuating means used to carry out the rotation thereof.

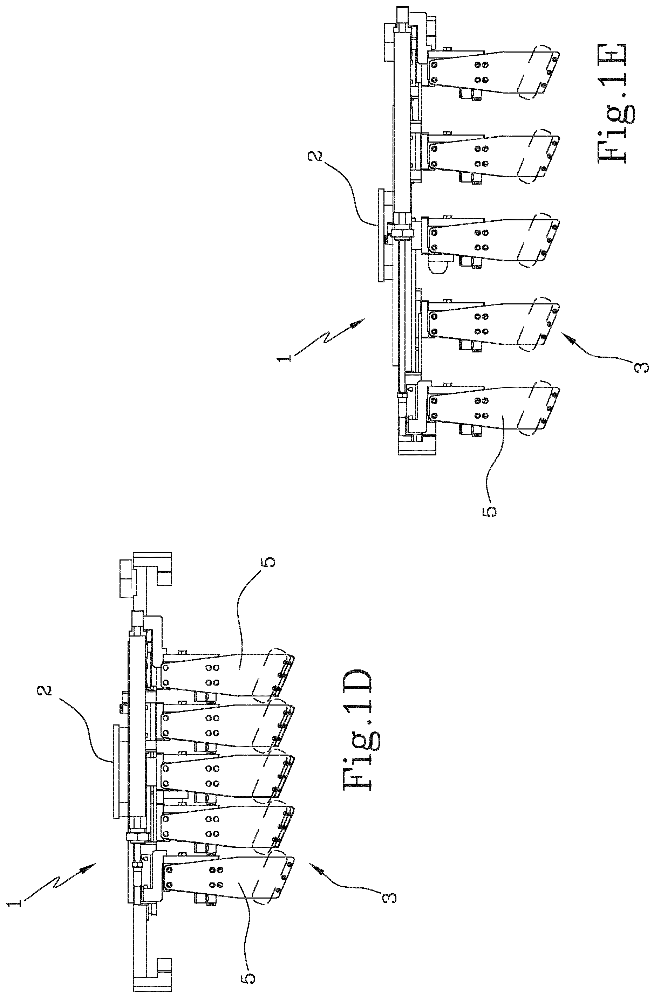

In accordance with a possible embodiment of the present invention, the first blocking elements 5 and/or the second blocking elements 6 are, moreover, reversibly movable along a direction "X" which is transverse, preferably perpendicular, to the movement direction "Y" between a mutual approaching configuration (figures 1C, 1D) and a mutual distancing configuration (figures 1A, 1E).

Furthermore, the first blocking elements 5 and/or the second blocking elements 6 can be reversibly rotatable with respect to the support portion 2 around an axis preferably parallel and/or coinciding with the respective movement direction "Y".

Thereby, the first blocking elements 5 and/or the second blocking elements 6 can allow a mutual approaching and/or distancing of the packets "P" of pasta constrained to the gripping device 1.

In accordance with a purely descriptive and non-limiting embodiment of the present invention, such a movement can allow a plurality of packets "P" of pasta to be approached so as to facilitate the insertion thereof inside a secondary packaging.

For example, such a movement can allow the packets "P" of pasta to be approached so as to create a filling layer of a secondary packaging.

In the present discussion, the term "secondary packaging" refers to packaging, for example a cardboard box, adapted to group a plurality of individual products already provided with a primary packaging, for example a packet "P" of pasta.

According to some possible, purely exemplary and non-limiting embodiments of the present invention, each of the first blocking elements 5 and/or each of the second blocking elements 6 can be reversibly movable along the aforementioned direction "X" and/or can be reversibly rotatable with respect to the support portion 2 around an axis preferably parallel and/or coinciding with the respective movement direction "Y" autonomously and/or independently of the movement of the remaining first blocking elements 5 and/or second blocking elements 6.

In other words, each of the first blocking elements 5 and/or each of the second blocking elements 6 can be selectively movable along the direction "X" and/or can be selectively rotatable with respect to the support portion 2 around an axis substantially parallel and/or coinciding with the aforementioned movement direction "Y".

According to further possible embodiments of the present invention, the first blocking elements 5 and/or the second blocking elements 6 can be moved along the aforementioned direction "X" and/or can be reversibly rotatable with respect to the support portion 2 around an axis preferably parallel and/or coinciding with the respective movement direction "Y" in a manner at least partially dependent on each other in order to optimise the use of the actuating means used to carry out the movement thereof.

Advantageously, the first blocking portion 3 (and/or the first blocking elements 5) and/or the second blocking portion 4 (and/or the second blocking elements 6) can have a substantially planar shape extending transversely, preferably perpendicularly, to the movement direction "Y" so as to allow an introduction of the packets "P" of pasta inside the secondary packaging, limiting the service volume needed by the first blocking portion 3 (and/or the first blocking elements 5) and/or the second blocking portion 4 (and/or the second blocking elements 6) for the deposit and release of the packets "P" of pasta.

Thereby, the first blocking portion 3 (and/or the first blocking elements 5) and/or the second blocking portion 4 (and/or the second blocking elements 6) can be adapted to release the packets "P" of pasta near the opening of the secondary packaging and/or to deposit the packets "P" inside the secondary packaging.

In particular, the limited service volume needed by the first blocking portion 3 (and/or the first blocking elements 5) and/or the second blocking portion 4 (and/or the second blocking elements 6) for the deposit and release of the packets "P" of pasta allows, very advantageously, the use of smaller secondary packaging, for example defining an opening for the insertion of the product a few millimetres wider than the length of the packet "P" of pasta, with the consequent reduction of the costs of the secondary packaging and reduction of the volume occupied by the secondary packaging itself, resulting in an operational efficiency and a decrease in costs both during transport and during storage.

According to a purely illustrative and non-limiting possible embodiment, the first blocking portion 3 (and/or the first blocking elements 5) and/or the second blocking portion 4 (and/or the second blocking elements 6) can be at least partially made of aluminium and/or an aluminium-containing alloy.

Advantageously, the first blocking portion 3 (and/or the first blocking elements 5) and/or the second blocking portion 4 (and/or the second blocking elements 6) can be made at least partially of an aluminium alloy of the series 7000, for example the aluminium alloy marketed under the trade name Ergal^{®}, so as to ensure high mechanical strength to the gripping device 1.

In accordance with further possible embodiments, the first blocking portion 3 (and/or the first blocking elements 5) and/or the second blocking portion 4 (and/or the second blocking elements 6) can be made at least partially of materials different from those mentioned above, for example comprising polymeric materials and/or different types of metal, without altering the inventive concept underlying the present invention.

Furthermore, the first blocking portion 3 (and/or the first blocking elements 5) and/or the second blocking portion 4 (and/or the second blocking elements 6) can comprise increased friction coefficient portions, for example defined by a particular surface texture and/or obtained by the use of rubberised bodies, to increase the effectiveness of the constraint with the packet "P" of pasta in the gripping position of the first blocking portion 3 and the second blocking portion 4.

For example, the first blocking elements 5 and/or the second blocking elements 6 can have polymer coatings, for example comprising polyurethane.

According to further embodiments, such increased friction coefficient portions can be not included without the inventive concept underlying the present invention being altered.

According to a possible embodiment of the present invention not illustrated in the accompanying drawings, the gripping device 1 can further comprise pneumatic gripping means which is reversibly activatable on the packet to constrain it to the same gripping device 1.

Preferably, such pneumatic means comprises at least one suction cup activatable on the packet "P" of pasta, even more preferably, at the aforementioned central portion.

Advantageously, the gripping device 1 can comprise detection means (not illustrated in the accompanying drawings), for example comprising at least one acceleration sensor and/or a force sensor and/or a distance sensor and/or a photocell, adapted to generate at least one signal representative of at least one operating parameter of the gripping device 1.

For example, such sensors can provide signals representative of the interaction between the first blocking portion 3 (and/or the first blocking elements 5) and/or the second blocking portion 4 (and/or the second blocking elements 6) with the packet "P" of pasta in order to obtain an optimisation of the movement of the gripping device 1.

In particular, such detection means can be connected to an external management unit adapted to process the aforementioned at least one signal and, preferably, operate the gripping device 1 according to the at least one signal and a predetermined logic.

In accordance with a further aspect, the present invention refers to an apparatus 100 for distributing at least one product, in particular a packet "P" of long dried pasta, comprising at least one feed conveyor 101 configured to move at least one product along a feeding path "A".

Preferably, the at least one feed conveyor 101 is operatively connected or connectable to a packaging machine to receive at least one packet "P" of pasta, preferably a flow of packets "P" of pasta.

In accordance with a possible embodiment and as illustrated in the accompanying drawings, the apparatus 100 comprises a plurality of feed conveyors 101 configured to move at least one respective product along a respective feeding path "A".

Advantageously, such feed conveyors 101 can be mutually juxtaposed and/or define feeding paths "A" which are at least partially parallel so as to reduce the volumetric dimensions induced within the operating environment.

Preferably, the feed conveyor 101 comprises a plurality of support elements 102.

In particular, each support element 102 can be shaped to supportingly receive a respective product to be moved along the feeding path "A".

In accordance with a possible embodiment and as illustrated in the accompanying drawings, the support elements 102 are shaped to supportingly receive a packet "P" of pasta so that the main extension axis of the packet "P" of pasta is transverse, preferably perpendicular, to the feeding path "A".

Advantageously, each support element 102 can define a respective support plane 103 which is inclined with respect to the feeding path "A".

In particular, the support planes 103, defined by the plurality of support elements 102, are mutually parallel defining a sawtooth profile of the feed conveyor 101 so as to simplify the gripping and releasing procedures as will be described in detail below.

Furthermore, the inclined support planes 103 allow to increase the number of products arranged on the conveyor 101 and, at the same time, allow to vary the size of the product, preferably the packet "P" of pasta (for example passing from a packet "P" of pasta from 250 grams to one of 500 grams or vice versa), without the need for machine stops due to the changes in operating parameters.

The apparatus 100 further comprises at least one packaging conveyor 104 configured to move at least one secondary packaging "S", preferably a carton, along a packaging path "B", of the packaging conveyor 104.

In accordance with a possible embodiment and as illustrated in the accompanying drawings, the packaging path "B" is substantially parallel and in the opposite direction with respect to the feeding path "A", helping to reduce the dimensions defined by the apparatus 100 within the operating environment.

Furthermore, the apparatus 100 comprises movement means 105 adapted to move the at least one product, preferably at least one packet "P" of pasta, between the feed conveyor 101 and the packaging conveyor 104 at at least one filling station 1000 defined along the packaging path "B".

Preferably, the movement means 105 can comprise manipulator devices, for example delta robots, Cartesian manipulators, pickers, anthropomorphic robotic arms, scara robots and/or the like.

The apparatus 100 further comprises at least one gripping device configured to pick up the at least one product from the feed conveyor 101 and release the at least one product inside the secondary packaging "S".

In other words, the movement means 105 can move the at least one gripping device between the feed conveyor 101 and the packaging conveyor 104, preferably to pick up at least one product at at least one gripping station 1001 defined along the feeding path "A" and release it at the at least one filling station 1000 defined along the packaging path "B".

In particular, the positioning of the gripping station 1001 can be variable along the feeding path "A" as a function of a plurality of different operating parameters, for example the positioning of the movement means 105 and/or of the secondary packaging "S" along the packaging path "B".

Advantageously, the gripping device can be a gripping device 1 in accordance with what has been described above.

In particular, the gripping device 1 can be activated simultaneously on a plurality of packets "P" of pasta by constraining them to the movement means 105 so as to determine a reduction, with respect to the systems of the prior art, of the movements which the movement means must perform to move a given quantity of packets "P" of pasta.

Advantageously, the plurality of support elements 102, adapted to support the packets "P" of pasta on the respective support planes 103 with an inclined orientation with respect to the feeding path "A", allows the first blocking portion 3 and the second blocking portion 4 to constrain the packets "P" of pasta to the gripping device 1 so that they are parallel to each other and substantially inclined with respect to the feeding path "A" and, preferably, to a horizontal plane.

Thereby, at the mutual approaching configuration (figure 1C), the first blocking elements 5 and the second blocking elements 6 can define an at least partial overlapping of the packets "P" of pasta, minimising a transverse dimension defined by the plurality of packets "P" of pasta to facilitate a release inside the secondary packaging "S".

In other words, the relative movement along the direction "X" of the first blocking elements 5 and the second blocking elements 6 allows to make, for example during the movement of the plurality of packets "P" of pasta, a layer of the so-called "bundle" of packets "P" of pasta for filling the secondary packaging "S".

In particular, in the present discussion, the term "bundle" means a plurality of overlapping layers of packets of long dried pasta (generally, but not limited to, a number comprised between two and seven packets of long dried pasta), in which each layer is defined by a plurality of packets of long dried pasta (generally, but not limited to, a number comprised between two and seven packets of long dried pasta).

Advantageously, the at least one feed conveyor 101 is configured to produce at least one intermittent-type motion.

Thereby, the feed conveyor 101 can be moved after receiving, on one of the aforementioned support elements 102, a product so as to generate a continuous succession of products arranged on respective support elements 102.

According to the invention, the apparatus 100 comprises at least one support conveyor 106 configured to move at least one product along a support path "C" between a loading station 1002 and an unloading station 1003.

The at least one gripping device 1 is configured to pick up the at least one product, preferably at least one packet "P" of pasta, from the feed conveyor 101 and release the at least one product, preferably at least one packet "P" of pasta, at the loading station 1002 of the support conveyor 106.

Furthermore, the at least one gripping device 1 is configured to pick up the at least one product at the unloading station 1003 of the support conveyor 106 and release the at least one product at the at least one filling station 1000 of the packaging conveyor 104.

According to the invention, the support conveyor 106 has a receiving plane 109 adapted to supportingly receive at least one product so that the main extension axis of the product is transverse, preferably perpendicular, to the support path "C".

Furthermore, the support conveyor 106 comprises a sequence of separator elements 107 arranged along the support path "C" configured to define, with the receiving plane 109, a plurality of containment compartments 108 separated from each other by the separator elements 107.

In particular, each containment compartment 108 is adapted to supportingly receive a given number of products.

According to the invention, the separating elements 107 are reversibly movable, preferably parallel to the support path "C", according to a mutual approaching and mutual distancing motion to reduce and increase a size of the containment compartments 108 thus allowing to change the number of products, preferably of packets "P" of pasta, which each containment compartment 108 is adapted to receive.

Preferably, the movement means 105 comprises at least a first manipulator 110, connected or connectable to a first gripping device 1, configured to move the at least one product, preferably a plurality of products, from the feed conveyor 101 to the support conveyor 106.

Preferably, moreover, the movement means 105 can comprise at least a second manipulator 111, connected or connectable to a second gripping device 1, configured to move the at least one product, preferably the plurality of products, from the support conveyor 106 to a further support conveyor 106 and/or to the packaging conveyor 104 at the aforementioned at least one filling station 1000.

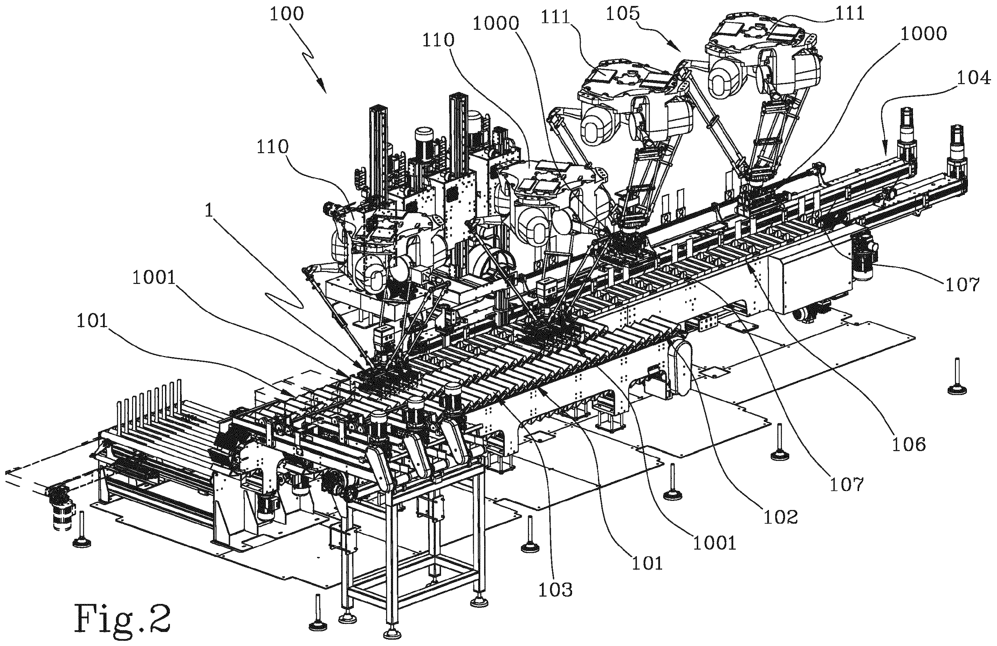

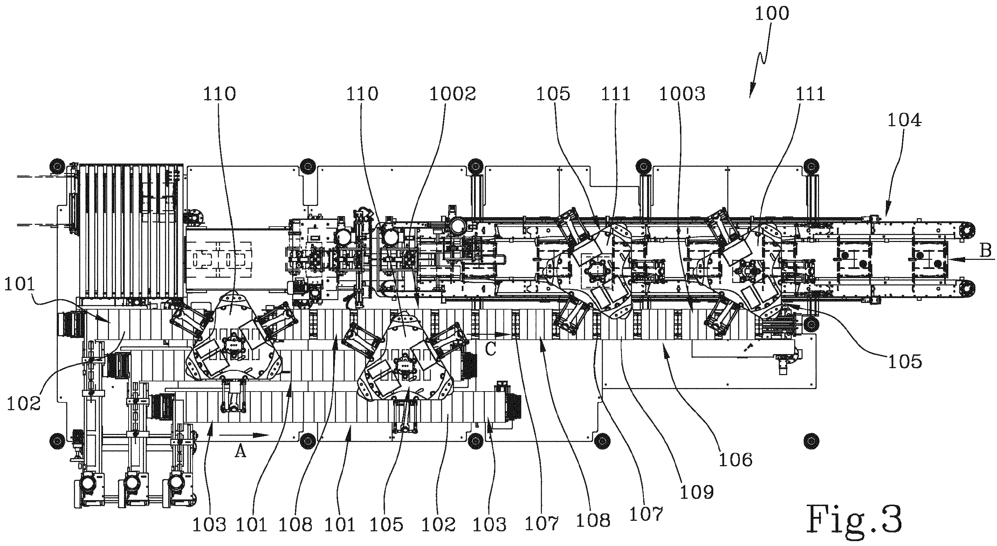

In accordance with a possible embodiment and as illustrated in figures 2-3, the movement means 105 comprises a pair of first manipulators 110 configured to move a plurality of packets "P" of pasta from the feed conveyor 101 to the support conveyor 106 and a pair of second manipulators 111 configured to move a plurality of packets "P" of pasta from the support conveyor 106 to the packaging conveyor 104 at the aforementioned at least one filling station 1000.

Preferably, the packaging path "B" defines a plurality of filling stations 1000 at which the manipulators can release the packets "P" of pasta inside the secondary packaging "S".

Furthermore, the apparatus 100 can comprise a forming unit 112 configured to form the secondary packaging "S".

Such a forming unit 112 can be arranged along the packaging path "B" at a forming station 1004 upstream of the at least one filling station 1000.

Furthermore, the apparatus 100 can comprise a closing unit 113 configured to perform a closure of the secondary packaging "S" and arranged along the packaging path "B" at a closing station 1005 downstream of the at least one filling station.

In accordance with a further aspect, the present invention relates to a method for distributing a plurality of products, preferably a plurality of packets of long dried pasta, comprising the steps of feeding a plurality of products along a feeding path "A" and picking up a given quantity of products at a gripping station 1001 of the feeding path "A".

Preferably, at least one step of the steps of the method is at least partially performed with a gripping device 1 and/or with an apparatus 100.

Advantageously, the step of feeding a plurality of products along a feeding path "A" can be performed by feeding the plurality of products intermittently along the feeding path.

Thereby, the method allows to generate a continuous succession of products, facilitating the step of picking up a given quantity of products.

Preferably, the step of picking up a given quantity of products is carried out by picking up a number of products, preferably packets "P" of pasta, comprised between two and seven.

In accordance with a possible embodiment of the present invention, the step of picking up a given quantity of products includes picking up a given quantity of packets "P" of pasta by means of at least one pair, preferably a plurality of pairs, of blocking elements adapted to abut opposite head portions of the same respective packet "P" of pasta.

Preferably, the method comprises a step of substantially simultaneously picking up the given quantity of products at the gripping station 1001 of the feeding path "A".

Furthermore, the method comprises the step of feeding at least a secondary packaging "S", preferably a preformed cardboard box, along a packaging path "B".

In particular, the packaging path defines at least one filling station 1000, preferably a plurality of filling stations 1000.

Furthermore, the method comprises the steps of moving the given quantity of products at least between the gripping station 1001 and the filling station 1000 and the step of releasing the given quantity of products inside the secondary packaging "S" at the at least one filling station 1000.

In particular, the step of releasing the given quantity of products can be carried out by depositing the products inside the secondary packaging "S" and/or releasing them near an access opening of the secondary packaging "S" so that, under the action of the force of gravity or appropriate ejection devices, they are arranged inside the secondary packaging "S".

Advantageously, the method can comprise a step of approaching, preferably at least partially overlapping, the products of the given quantity of products to form a filling layer for a secondary packaging.

Thereby, the method allows the size of the layer to be adjusted so that they are compatible with those of the secondary packaging.

In particular, such an approaching step, preferably at least partially overlapping the products of the given quantity of products can be carried out during the step of moving the given quantity of products at least between the gripping station 1001 and the filling station 1000.

Thereby, the method allows to make, during the movement of a given amount of packets "P" of pasta, a layer of the so-called "bundle" of packets "P" of pasta for filling the secondary packaging "S".

Preferably, the method further comprises the step of feeding at least the given quantity of products along a support path "C" from a loading station 1002 to an unloading station 1003.

Furthermore, the step of moving the given quantity of products at least between the gripping station 1001 and the filling station 1000 can comprise the sub-step of releasing the given quantity of products at the loading station 1002, the sub-step of picking up the given quantity of products from the unloading station 1003, and/or the sub-step of moving the at least one product from the unloading station 1003 to the filling station 1000.

Preferably, the method comprises a step of substantially simultaneously releasing a plurality of products at the loading station 1002.

Furthermore, the method can comprise a step of substantially simultaneously picking up a plurality of products at the unloading station 1003 of the support path "C".

It is thus noted that the present invention achieves the proposed objects by making a gripping device for at least one product, preferably a packet of pasta, an apparatus for distributing at least one product, preferably a packet of pasta, and a method for distributing at least one product, preferably a packet of pasta capable of simplifying the distribution and sorting operations of the products within a production line by virtue of the presence of at least one feed conveyor, at least one configured packaging conveyor and movement means adapted to move at least one gripping device between the feed conveyor and the packaging conveyor to pick up at least one product from the feed conveyor and release it inside the secondary packaging.

Advantageously, the gripping device ensures a high positioning accuracy of the product with respect to the movement means, overcoming the inaccuracies due to the inevitable dimensional tolerances which must be considered using only pneumatic gripping devices.

Advantageously, the present invention allows, by virtue of the presence of a plurality of substantially independent conveyors, to increase the number of product flows from the packaging machines, increasing the production efficiency.

Advantageously, the present invention ensures a reduction of the dimensions, allowing to use a single forming machine for forming the secondary packaging necessary for the products coming from a plurality of packaging machines.

Furthermore, very advantageously, it overcomes the need for machine stoppages imposed by any failure of one of the filling machines by virtue of the presence of a plurality of manipulators which ensure the continuation of the filling operations of the secondary packaging.

## Claims

1. An apparatus (100) for distributing at least one product, in particular a packet (P) of long dried pasta, comprising:
- at least one feed conveyor (101) configured to move at least one product along a feeding path (A);
- at least one packaging conveyor (104) configured to move at least a secondary packaging (S), preferably a carton, along a packaging path (B) of said packaging conveyor (104);
- at least one gripping device (1) configured to pick up at least one product from said feed conveyor (101) and release said at least one product inside the secondary packaging (S);
- movement means (105) adapted to move said at least one gripping device (1) between said feed conveyor (101) and said packaging conveyor (104) at at least one filling station (1000) defined along said packaging path (B);
- at least one support conveyor (106) configured to move at least one product along a support path (C) between a loading station (1002) and an unloading station (1003); wherein said at least one gripping device (1) is configured to pick up said at least one product from said feed conveyor (101) and release said at least one product at said loading station (1002) of said support conveyor (106); and wherein said at least one gripping device (1) is configured to pick up said at least one product at said unloading station (1003) of said support conveyor (106) and release said at least one product at said at least one filling station (1000) of said packaging conveyor (104);
wherein said support conveyor (106) has a receiving plane (109) adapted to supportingly receive said at least one product so that the main extension axis of said product is transverse, preferably perpendicular, to said support path (C); and wherein said support conveyor (106) comprises a sequence of separating elements (107) arranged along said support path (C) configured to define a plurality of containment compartments (108) separated from each other by said separating elements (107), each containment compartment being adapted to supportingly receive a certain number of products;
**characterized in that** said separating elements (107) are reversibly movable, preferably parallel to said support path (C), according to a mutual approaching and mutual distancing motion to reduce and increase a dimension of said containment compartments (108).

2. The apparatus according to claim 1, wherein at least one gripping device (1) is a gripping device (1) for at least one packet (P) of long dried pasta and comprises:
- a support portion (2) adapted to connect said gripping device (1) to said movement means (105) to move at least one packet (P) between a plurality of operating positions;
- at least a first blocking portion (3) and at least a second blocking portion (4) reversibly movable closer and farther away along a movement direction (Y) parallel to a main extension axis of the packet (P) between a gripping position, in which said at least a first blocking portion (3) and at least a second blocking portion (4) are arranged at a first distance so as to abut against respective opposite head portions of the packet to constrain the packet (P) to the gripping device (1),
and a release position, in which said at least a first blocking portion (3) and at least a second blocking portion (4) are arranged at a second distance greater than said first distance.

3. The apparatus according to claim 2, wherein said first blocking portion (3) and said second blocking portion (4) are respectively defined by a plurality of first blocking elements (5) and second blocking elements (6), each of said first blocking elements (5) being arranged opposite a respective second blocking element with respect to said movement direction (Y).

4. The apparatus according to claim 3, wherein said first blocking elements (5) and/or said second blocking elements (6) are reversibly movable along a transverse direction (X), preferably perpendicular, to said movement direction (Y) between a mutual approaching configuration and a mutual distancing configuration.

5. The apparatus according to one or more of claims 2-4, comprising pneumatic gripping means which is reversibly activatable on the packet (P) to constrain it to said gripping device (1).

6. The apparatus according to one or more of the preceding claims, wherein said at least one feed conveyor (101) is configured to produce at least one intermittent-type motion.

7. The apparatus according to one or more of the preceding claims, wherein said at least one feed conveyor (101) comprises a plurality of support elements, each support element (102) being shaped to supportingly receive a product so that the main extension axis of said product is transverse, preferably perpendicular, to said feeding path (A), each of said support elements defining a respective support plane (103) which is inclined with respect to said feeding path (A).

8. The apparatus according to one or more of the preceding claims, wherein said movement means (105) comprises one or more manipulators of the robot delta, Cartesian, picker, anthropomorphic and/or scara type.

9. The apparatus according to one or more of the preceding claims, wherein said movement means (105) comprises at least a first manipulator (110), connected or connectable to a first gripping device (1), configured to move the at least one product, preferably a plurality of products, from said feed conveyor (101) to said support conveyor (106); and wherein said movement means (105) comprises at least a second manipulator (111), connected or connectable to a second gripping device (1), configured to move the at least one product, preferably the plurality of products, from said support conveyor (106) to a further support conveyor (106) and/or to said packaging conveyor (104) at said at least one filling station (1000).

10. The apparatus according to one or more of the preceding claims, comprising a forming unit (112) configured to form said secondary packaging (S) and arranged along said packaging path (B) upstream of said at least one filling station (1000) at a forming station (1004) and a closing unit configured to obtain a closure of said secondary packaging (S) and arranged along said packaging path (B) downstream of said at least one filling station (1000) at a closing station (1005).

11. A method for distributing a plurality of products, preferably a plurality of packets of long dried pasta, comprising the steps of:
- feeding a plurality of products along a feeding path (A);
- picking up a given quantity of products at a gripping station (1001) of said feeding path (A);
- feeding at least a secondary packaging (S), preferably a preformed carton, along a packaging path (B), said packaging path (B) defining at least one filling station (1000), preferably a plurality of filling stations;
- moving the given quantity of products at least between said gripping station (1001) and said filling station (1000); and
- releasing the given quantity of products inside the secondary packaging (S) at said at least one filling station (1000);
wherein at least one of said steps is at least partially carried out with an apparatus (100) for distributing at least one product, in particular a packet (P) of long dried pasta, according to claims 1-10.

12. The method according to claim 11, wherein said step of feeding a plurality of products along a feeding path (A) is carried out by feeding the plurality of products intermittently along said feeding path (A).

13. The method according to claim 11 or 12, comprising a step of substantially simultaneously picking up the given quantity of products at said gripping station (1001) of said feeding path (A).

14. The method according to one or more of claims 11-13, comprising a step of approaching, preferably at least partially overlapping, the products of the given quantity of products to form a filling layer for a secondary packaging (S).

15. The method according to one or more of claims 11-14, comprising the step of:
- feeding at least the given quantity of products along a support path (C) from a loading station (1002) to an unloading station (1003);
said step of moving the given quantity of products at least between said gripping station (1001) and said filling station (1000) comprising the substeps of:
- releasing the given quantity of products at said loading station (1002);
- picking up the given quantity of products from said unloading station (1003);
- moving the at least one product from said unloading station (1003) to said filling station (1000).

16. The method according to claim 15, comprising a step of substantially simultaneously releasing a plurality of products at said loading station (1002).

17. The method according to claim 15 or 16, comprising a step of substantially simultaneously picking up a plurality of products at said unloading station (1003) of said support path (C).

## Patentansprüche

1. Einrichtung (100) zum Verteilen mindestens eines Produkts, insbesondere eines Pakets (P) langer getrockneter Nudeln, umfassend:
- mindestens einen Zuführförderer (101), der dazu ausgelegt ist, mindestens ein Produkt entlang eines Zuführwegs (A) zu bewegen;
- mindestens einen Verpackungsförderer (104), der dazu ausgelegt ist, mindestens eine Sekundärverpackung (S), vorzugsweise einen Karton, entlang eines Verpackungswegs (B) des Verpackungsförderers (104) zu bewegen;
- mindestens eine Greifvorrichtung (1), die dazu ausgelegt ist, mindestens ein Produkt von dem Zuführförderer (101) zu entnehmen und das mindestens eine Produkt in der Sekundärverpackung (S) freizugeben;
- Bewegungsmittel (105), die angepasst sind, um die mindestens eine Greifvorrichtung (1) zwischen dem Zuführförderer (101) und dem Verpackungsförderer (104) an mindestens einer Füllstation (1000) zu bewegen, die entlang des Verpackungswegs (B) definiert ist;
- mindestens einen Stützförderer (106), der ausgelegt ist, um mindestens ein Produkt entlang eines Stützwegs (C) zwischen einer Ladestation (1002) und einer Entladestation (1003) zu bewegen; wobei die mindestens eine Greifvorrichtung (1) ausgelegt ist, um das mindestens eine Produkt von dem Zuführförderer (101) zu entnehmen und das mindestens eine Produkt an der Ladestation (1002) des Stützförderers (106) freizugeben; und wobei die mindestens eine Greifvorrichtung (1) ausgelegt ist, um das mindestens eine Produkt an der Entladestation (1003) des Stützförderers (106) zu entnehmen und das mindestens eine Produkt an der mindestens einen Füllstation (1000) des Verpackungsförderers (104) freizugeben;
wobei der Stützförderer (106) eine Empfangsebene (109) aufweist, die dazu angepasst ist, das mindestens eine Produkt abstützend so zu empfangen, dass die Hauptausdehnungsachse des Produkts quer, vorzugsweise senkrecht, zu dem Stützweg (C) verläuft; und wobei der Stützförderer (106) eine Abfolge von Trennelementen (107) umfasst, die entlang dem Stützweg (C) angeordnet sind, der dazu ausgelegt ist, eine Vielzahl von Aufnahmeunterteilungen (108) zu definieren, die durch die Trennelemente (107) voneinander getrennt sind, wobei jede Aufnahmeunterteilung dazu angepasst ist, eine bestimmte Anzahl von Produkten abstützend zu empfangen; **dadurch gekennzeichnet, dass** die Trennelemente (107) gemäß einer gegenseitigen Annäherungs- und Entfernungsbewegung reversibel bewegbar sind, vorzugsweise parallel zu dem Stützweg (C), um eine Abmessung der Aufnahmeunterteilungen (108) zu verringern und zu vergrößern.

2. Einrichtung nach Anspruch **1,** wobei mindestens eine Greifvorrichtung (1) eine Greifvorrichtung (1) für mindestens ein Paket (P) langer getrockneter Nudeln ist und Folgendes umfasst:
- einen Stützabschnitt (2), der angepasst ist, um die Greifvorrichtung (1) mit den Bewegungsmitteln (105) zu verbinden, um mindestens ein Paket (P) zwischen einer Vielzahl von Betriebspositionen zu bewegen;
- mindestens einen ersten Festspannabschnitt (3) und mindestens einen zweiten Festspannabschnitt (4), die reversierbar entlang einer Bewegungsrichtung (Y), die parallel zu einer Hauptausdehnungsachse des Pakets (P) zwischen einer Greifposition, in der der mindestens eine erste Festspannabschnitt (3) und mindestens ein zweiter Festspannabschnitt (4) an einem ersten Abstand angeordnet sind, sodass sie gegen jeweilige entgegengesetzte Kopfabschnitte des Pakets anschlagen, um das Paket an der Greifvorrichtung (1) festzuklemmen, und einer Freigabeposition, in der der mindestens eine erste Festspannabschnitt (3) und mindestens ein zweiter Festspannabschnitt (4) an einem zweiten Abstand angeordnet sind, der größer ist als der erste Abstand, in Annäherung und wegführend bewegbar sind.

3. Einrichtung nach Anspruch 2, wobei der erste Festspannabschnitt (3) und der zweite Festspannabschnitt (4) jeweils durch eine Vielzahl erster Festspannelemente (5) und zweiter Festspannelemente (6) definiert sind, wobei ein jedes der ersten Festspannelemente (5) gegenständig zu einem jeweiligen zweiten Festspannelement in Bezug auf die Bewegungsrichtung (Y) angeordnet ist.

4. Einrichtung nach Anspruch 3, wobei die ersten Festspannelemente (5) und/oder die zweiten Festspannelemente (6) reversierbar entlang einer Richtung (X), die quer, vorzugsweise senkrecht, zur Bewegungsrichtung (Y) verläuft, zwischen einer Auslegung des gegenseitigen Annäherns und einer Auslegung des gegenseitigen Entfernens bewegbar sind.

5. Einrichtung nach einem oder mehreren der Ansprüche 2-4, umfassend pneumatische Greifmittel, die reversierbar an dem Paket (P) aktivierbar sind, um dieses an die Greifvorrichtung (1) festzuklemmen.

6. Einrichtung nach einem oder mehreren der vorhergehenden Ansprüche, wobei der mindestens eine Zuführförderer (101) ausgelegt ist, um mindestens eine Bewegung intermittierender Art zu erzeugen.

7. Einrichtung nach einem oder mehreren der vorhergehenden Ansprüche, wobei der mindestens eine Zuführförderer (101) eine Vielzahl von Stützelementen umfasst, wobei jedes Stützelement (102) so geformt ist, dass es ein Produkt abstützend empfängt, so dass die Hauptausdehnungsachse des Produkts quer, vorzugsweise senkrecht, zu dem Zuführweg (A) verlauft, wobei jedes der Stützelemente eine jeweilige Stützebene (103) definiert, die in Bezug auf den Zuführweg (A) geneigt ist.

8. Einrichtung nach einem oder mehreren der vorhergehenden Ansprüche, wobei die Bewegungsmittel (105) einen oder mehrere Manipulatoren des Roboter-Delta-, kartesischen, Picker-, anthropomorphen und/oder Scara-Typs umfassen.

9. Einrichtung nach einem oder mehreren der vorhergehenden Ansprüche, wobei die Bewegungsmittel (105) mindestens einen ersten Manipulator (110) umfassen, der mit einer ersten Greifvorrichtung (1) verbunden oder verbindbar ist, die dazu ausgelegt ist, das mindestens eine Produkt, vorzugsweise eine Vielzahl von Produkten, von dem Zuführförderer (101) zu dem Stützförderer (106) zu bewegen; und wobei die Bewegungsmittel (105) mindestens einen zweiten Manipulator (111) umfassen, der mit einer zweiten Greifvorrichtung (1) verbunden oder verbindbar ist, die dazu ausgelegt ist, das mindestens eine Produkt, vorzugsweise die Vielzahl von Produkten, von dem Stützförderer (106) zu einem weiteren Stützförderer (106) und/oder zu dem Verpackungsförderer (104) an der mindestens einen Füllstation (1000) zu bewegen.

10. Einrichtung nach einem oder mehreren der vorhergehenden Ansprüche, umfassend eine Formeinheit (112), die ausgelegt ist, um die Sekundärverpackung (S) auszuformen, und die entlang des Verpackungswegs (B) stromaufwärts der mindestens einen Füllstation (1000) an einer Formstation (1004) angeordnet ist, und eine Verschlusseinheit, die ausgelegt ist, um einen Verschluss der Sekundärverpackung (S) zu erzielen, und die entlang des Verpackungswegs (B) stromabwärts der mindestens einen Füllstation (1000) an einer Verschlussstation (1005) angeordnet ist.

11. Verfahren zum Verteilen einer Vielzahl von Produkten, vorzugsweise einer Vielzahl von Paketen langer getrockneter Nudeln, umfassend die folgenden Schritte:
- Zuführen einer Vielzahl von Produkten entlang eines Zuführwegs (A);
- Entnehmen einer bestimmten Menge von Produkten an einer Greifstation (1001) des Zuführwegs (A);
- Zuführen mindestens einer Sekundärverpackung (S), vorzugsweise eines vorgeformten Kartons, entlang eines Verpackungswegs (B), wobei der Verpackungsweg (B) mindestens eine Füllstation (1000), vorzugsweise eine Vielzahl von Füllstationen, definiert;
- Bewegen der bestimmten Menge von Produkten zumindest zwischen der Greifstation (1001) und der Füllstation (1000); und
- Freigeben der bestimmten Menge von Produkten innerhalb der Sekundärverpackung (S) an der mindestens einen Füllstation (1000);
wobei mindestens einer der Schritte mindestens teilweise mit einer Einrichtung(100) zum Verteilen mindestens eines Produkts, insbesondere eines Pakets (P) langer getrockneter Nudeln, nach den Ansprüchen 1-10 durchgeführt wird.

12. Verfahren nach Anspruch 11, wobei der Schritt zum Zuführen einer Vielzahl von Produkten entlang eines Zuführwegs (A) durch intermittierendes Zuführen der Vielzahl von Produkten entlang des Zuführwegs (A) durchgeführt wird.

13. Verfahren nach Anspruch 11 oder 12, umfassend einen Schritt zum im Wesentlichen gleichzeitigen Entnehmen der bestimmten Menge von Produkten an der Greifstation (1001) des Zuführwegs (A).

14. Verfahren nach einem oder mehreren der Ansprüche 11-13, umfassend einen Schritt zum Annähern, vorzugsweise zumindest teilweise Überlappen, der Produkte der bestimmten Menge von Produkten, um eine Füllschicht für eine Sekundärverpackung (S) auszuformen.

15. Verfahren nach einem oder mehreren der Ansprüche 11-14, umfassend den folgenden Schritt:
- Zuführen mindestens der bestimmten Menge von Produkten entlang eines Stützwegs (C) von einer Ladestation (1002) zu einer Entladestation (1003);
wobei der Schritt zum Bewegen der bestimmten Menge von Produkten zumindest zwischen der Greifstation (1001) und der Füllstation (1000) die folgenden Teilschritte umfasst:
- Freigeben der bestimmten Menge von Produkten an der Ladestation (1002);
- Entnehmen der bestimmten Menge von Produkten von der Entladestation (1003);
- Bewegen des mindestens einen Produkts von der Entladestation (1003) zu der Füllstation (1000).

16. Verfahren nach Anspruch 15, umfassend einen Schritt zum im Wesentlichen gleichzeitigen Freigeben einer Vielzahl von Produkten an der Ladestation (1002).

17. Verfahren nach Anspruch 15 oder 16, umfassend einen Schritt zum im Wesentlichen gleichzeitigen Entnehmen einer Vielzahl von Produkten an der Entladestation (1003) des Stützwegs (C).

## Revendications

1. Appareil (100) pour distribuer au moins un produit, en particulier un paquet (P) de pâtes sèches longues, comprenant :
- au moins un transporteur d'alimentation (101) configuré pour déplacer au moins un produit le long d'une trajectoire d'alimentation (A) ;
- au moins un transporteur d'emballage (104) configuré pour déplacer au moins un emballage secondaire (S), de préférence un carton, le long d'une trajectoire d'emballage (B) dudit transporteur d'emballage (104) ;
- au moins un dispositif de préhension (1) configuré pour saisir au moins un produit à partir dudit transporteur d'alimentation (101) et libérer ledit au moins un produit à l'intérieur de l'emballage secondaire (S) ;
- des moyens de déplacement (105) adaptés pour déplacer ledit au moins un dispositif de préhension (1) entre ledit transporteur d'alimentation (101) et ledit transporteur d'emballage (104) en correspondance d'au moins un poste de remplissage (1000) défini le long de ladite trajectoire d'emballage (B) ;
- au moins un transporteur de support (106) configuré pour déplacer au moins un produit le long d'une trajectoire de support (C) entre un poste de chargement (1002) et une poste de déchargement (1003) ; dans lequel ledit au moins un dispositif de préhension (1) est configuré pour saisir ledit au moins un produit à partir dudit transporteur d'alimentation (101) et libérer ledit au moins un produit audit poste de chargement (1002) dudit transporteur de support (106) ; et dans lequel ledit au moins un dispositif de préhension (1) est configuré pour saisir ledit au moins un produit audit poste de déchargement (1003) dudit transporteur de support (106) et libérer ledit au moins un produit audit au moins un poste de remplissage (1000) dudit transporteur d'emballage (104) ;
dans lequel ledit transporteur de support (106) comporte un plan de réception (109) adapté pour recevoir et supporter ledit au moins un produit de manière à ce que **l'axe** d'extension principal dudit produit soit transversal, de préférence perpendiculaire, à ladite trajectoire de support (C) ; et dans lequel ledit transporteur de support (106) comprend une séquence d'éléments de séparation (107) disposés le long de ladite trajectoire de support (C) configurés pour définir une pluralité de compartiments de contenance (108) séparés les uns des autres par lesdits éléments de séparation (107), chaque compartiment de contenance étant adapté pour recevoir et supporter un certain nombre de produits ;
**caractérisé en ce que** lesdits éléments de séparation (107) sont mobiles de manière réversible, de préférence parallèlement à ladite trajectoire de support (C), selon un mouvement de rapprochement et d'éloignement mutuels pour réduire et augmenter une dimension desdits compartiments de contenance (108).

2. Appareil selon la revendication **1,** dans lequel au moins un dispositif de préhension (1) est un dispositif de préhension (1) pour au moins un paquet (P) de pâtes sèches longues et comprend :
- une partie de support (2) adaptée pour relier ledit dispositif de préhension (1) auxdits moyens de déplacement (105) pour déplacer au moins un paquet (P) entre une pluralité de positions de fonctionnement ;
- au moins une première partie de blocage (3) et au moins une seconde partie de blocage (4) pouvant se rapprocher et s'éloigner de manière réversible le long d'une direction de déplacement (Y) parallèle à un axe d'extension principal du paquet (P) entre une position de préhension, dans laquelle ladite au moins une première partie de blocage (3) et ladite au moins une seconde partie de blocage (4) sont disposées à une première distance de manière à venir se mettre en butée contre des parties de tête opposées respectives du paquet pour contraindre le paquet (P) au dispositif de préhension (1),
et une position de libération, dans laquelle au moins une première partie de blocage (3) et au moins une seconde partie de blocage (4) sont disposées à une seconde distance plus grande que ladite première distance.

3. Appareil selon la revendication 2, dans lequel ladite première partie de blocage (3) et ladite seconde partie de blocage (4) sont respectivement définies par une pluralité de premiers éléments de blocage (5) et de seconds éléments de blocage (6), chacun desdits premiers éléments de blocage (5) étant disposé à l'opposé d'un second élément de blocage respectif par rapport à ladite direction de déplacement (Y).

4. Appareil selon la revendication 3, dans lequel lesdits premiers éléments de blocage (5) et/ou lesdits seconds éléments de blocage (6) sont mobiles de manière réversible le long d'une direction transversale (X), de préférence perpendiculaire, à ladite direction de déplacement (Y) entre une configuration de rapprochement mutuel et une configuration d'éloignement mutuel.

5. Appareil selon une ou plusieurs des revendications 2-4, comprenant des moyens de préhension pneumatiques pouvant être activés de façon réversible sur le paquet (P) pour le contraindre audit dispositif de préhension (1).

6. Appareil selon l'une ou plusieurs des revendications précédentes, dans lequel ledit au moins un transporteur d'alimentation (101) est configuré pour produire au moins un déplacement de type intermittent.

7. Appareil selon l'une ou plusieurs des revendications précédentes, dans lequel ledit au moins un transporteur d'alimentation (101) comprend une pluralité d'éléments de support, chaque élément de support (102) étant façonné pour recevoir et supporter un produit de manière à ce que l'axe d'extension principal dudit produit soit transversal, de préférence perpendiculaire, à ladite trajectoire d'alimentation (A), chacun desdits éléments de support définissant un plan de support respectif (103) qui est incliné par rapport à ladite trajectoire d'alimentation (A).

8. Appareil selon l'une ou plusieurs des revendications précédentes, dans lequel lesdits moyens de déplacement (105) comprennent un ou plusieurs manipulateurs de type robot delta, cartésien, de prélèvement, anthropomorphe et/ou scara.

9. Appareil selon l'une ou plusieurs des revendications précédentes, dans lequel lesdits moyens de déplacement (105) comprennent au moins un premier manipulateur (110), relié ou pouvant être relié à un premier dispositif de préhension (1), configuré pour déplacer l'au moins un produit, de préférence une pluralité de produits, dudit transporteur d'alimentation (101) vers ledit transporteur de support (106) ; et dans lequel lesdits moyens de déplacement (105) comprennent au moins un second manipulateur (111), relié ou pouvant être relié à un second dispositif de préhension (1), configuré pour déplacer au moins un produit, de préférence la pluralité de produits, dudit transporteur de support (106) à un transporteur de support (106) supplémentaire et/ou audit transporteur d'emballage (104) en correspondance dudit au moins un poste de remplissage (1000).

10. Appareil selon l'une ou plusieurs des revendications précédentes, comprenant une unité de formage (112) configurée pour former ledit emballage secondaire (S) et disposée le long de ladite trajectoire d'emballage (B) en amont dudit au moins un poste de remplissage (1000) en correspondance d'un poste de formage (1004) et une unité de fermeture configurée pour obtenir une fermeture dudit emballage secondaire (S) et disposée le long de ladite trajectoire d'emballage (B) en aval dudit au moins un poste de remplissage (1000) en correspondance d'un poste de fermeture (1005).

11. Procédé pour distribuer une pluralité de produits, de préférence une pluralité de paquets de pâtes sèches longues, comprenant les étapes suivantes :
- alimenter une pluralité de produits le long d'une trajectoire d'alimentation (A) ;
- saisir une quantité donnée de produits à un poste de préhension (1001) de ladite trajectoire d'alimentation (A) ;
- alimenter au moins un emballage secondaire (S), de préférence un carton préformé, le long d'une trajectoire d'emballage (B), ladite trajectoire d'emballage (B) définissant au moins un poste de remplissage (1000), de préférence une pluralité de postes de remplissage ;
- déplacer la quantité donnée de produits au moins entre ledit poste de préhension (1001) et ledit poste de remplissage (1000) ; et
- libérer la quantité donnée de produits à l'intérieur de l'emballage secondaire (S) audit au moins un poste de remplissage (1000) ;
dans lequel au moins une desdites étapes est au moins partiellement réalisée avec un appareil (100) pour distribuer au moins un produit, en particulier un paquet (P) de pâtes sèches longues, selon les revendications 1-10.

12. Procédé selon la revendication 11, dans lequel ladite étape d'alimentation d'une pluralité de produits le long d'une trajectoire d'alimentation (A) est effectuée en alimentant la pluralité de produits par intermittence le long de ladite trajectoire d'alimentation (A).

13. Procédé selon la revendication 11 ou 12, comprenant une étape de préhension sensiblement simultanée de la quantité donnée de produits audit poste de préhension (1001) de ladite trajectoire d'alimentation (A).

14. Procédé selon l'une ou plusieurs des revendications 11-13, comprenant une étape consistant à rapprocher, de préférence en les faisant se chevaucher au moins en partie, les produits de la quantité donnée de produits pour former une couche de remplissage pour un emballage secondaire (S).

15. Procédé selon l'une ou plusieurs des revendications 11-14, comprenant l'étape suivante :
- alimenter au moins la quantité donnée de produits le long d'une trajectoire de support (C) à partir d'un poste de chargement (1002) jusqu'à un poste de déchargement (1003) ;
ladite étape de déplacement de la quantité donnée de produits au moins entre ledit poste de préhension (1001) et ledit poste de remplissage (1000) comprenant les sousétapes suivantes :
- libérer la quantité donnée de produits audit poste de chargement (1002) ;
- saisir la quantité donnée de produits à partir dudit poste de déchargement (1003) ;
- déplacer l'au moins un produit de dudit poste de déchargement (1003) audit poste de remplissage (1000).

16. Procédé selon la revendication 15, comprenant une étape de libération sensiblement simultanée d'une pluralité de produits audit poste de chargement (1002).

17. Procédé selon la revendication 15 ou 16, comprenant une étape de préhension sensiblement simultanée d'une pluralité de produits audit poste de déchargement (1003) de ladite trajectoire de support (A).
